# EUROPEAN PATENT APPLICATION

(11) **EP 2 466 193 A1**
(43) Date of publication of application: **20.06.2012**
(21) Application number: 10818629.7
(22) Date of filing: 05.08.2010
(51) Int. Cl.: F21S 2/00, F21V 5/00, F21V 7/00, G02F 1/13357, F21Y 101/02, F21Y 103/00

(54) **ILLUMINATION DEVICE, DISPLAY DEVICE, AND TELEVISION RECEIVER**

(30) Priority: 28.09.2009 JP 2009222915
(71) Applicant: Sharp Kabushiki Kaisha, Osaka-shi, Osaka 545-8522 (JP)
(72) Inventor: YOKOTA, Masashi, Osaka-shi, Osaka 545-8522 (JP)
(74) Representative: Müller-Boré & Partner Patentanwälte
(86) International application number: PCT/JP2010/063257
(87) International publication number: WO 2011/036953

(57) **Abstract**

A lighting device achieves cost reduction and suppression of power consumption with suppressing the occurrence of a lamp image. A lighting device 12 includes: a plurality of linear light sources 17 disposed in parallel; a chassis 14 housing the linear light sources 17 and having an opening 14b through which light from the linear light sources 17 exits; and an optical member 15a facing the linear light sources 17 and disposed to cover the opening 14b. The linear light sources 17 are arranged at relatively small intervals in a light source high-density region LH and arranged at relatively large intervals in a light source low-density region. An optical member 15a includes a light reflection portion 50 configured to reflect light from the linear light sources 17 at least in a portion overlapping with the light source low-density region LL.

## Description

### TECHNICAL FIELD

The present invention relates to a lighting device, a display device and a television receiver.

### BACKGROUND ART

For example, a liquid crystal panel used for a liquid crystal display device such as a liquid crystal television set dose not emit light, and therefore needs a backlight unit separately as a lighting device. In terms of the backlight unit, one installed on the backside of a liquid crystal panel (on the side opposite to a display surface) is well-known, and includes a chassis having an opening on a surface on the liquid crystal panel side, a plurality of light sources (cold cathode tubes, for example) housed in the chassis as lamps, and an optical member (such as a diffuser plate) disposed at the opening of the chassis and configured to efficiently exit light emitted by the light sources to the liquid crystal panel side.

If the light source emits linear light, such a backlight unit improves even brightness on a surface of the illumination light by the optical member converting linear light into planer light. However, if the linear light is not converted into planer light sufficiently, a linear lamp image may be generated based on the arrangement of the light sources, and the display quality of the liquid crystal display device is deteriorated.

In order to suppress the occurrence of a lamp image in the backlight unit, it is desirable to reduce the distance between adjacent light sources by increasing the number of light sources to be disposed and to increase the diffusion coefficient of the diffuser plate, for example. However, if the number of light sources is increased, the cost of the backlight unit and the power consumption also increase. Moreover, if the diffusion coefficient of the diffuser plate is increased, it is not possible to increase brightness, and again there arises a problem that the number of light sources needs to be increased. Hence, known is the one disclosed in the following Patent Document 1 as a backlight unit that suppresses power consumption and the occurrence of a lamp image.

The backlight unit described in Patent Document 1 includes a diffuser plate disposed in the lighting direction of a plurality of light sources, and a dot pattern for dimming is printed on the diffuser plate. The backlight unit is especially configured to have a large dot diameter immediately above the light source, and have progressively smaller dot diameters further from the light source. According to such a configuration, it is possible to radiate light having even brightness without increasing the power consumption of the light source by efficiently using light emitted from the light source.

Patent Document 1: Japanese Unexamined Patent Publication No. 2005-117023

### Problem to be Solved by the Invention

However, in the unit disclosed in Patent Document 1, the dot pattern for dimming is formed over the entire diffuser plate; accordingly, most of light from the light sources is reflected by the dots, and the brightness of the backlight unit as a whole tends to decrease. Especially if the light source is disposed in the middle portion of the backlight unit, the diameter of the dot is set to be large immediately above the light source; accordingly, brightness in the middle portion of an irradiated surface may decrease. If the backlight unit is used for a display device, the human eye usually directs attention to the middle portion of a display screen, and therefore if brightness in the middle portion is low, the low brightness region is conspicuous, and the visibility may significantly decrease. In this manner, there is still space for improvement in the development of a backlight unit that suppresses power consumption and the occurrence of a lamp image.

### DISCLOSURE OF THE PRESENT INVENTION

The present invention was made in view of the foregoing circumstances. An object thereof is to provide a lighting device that achieves cost reduction and the suppression of power consumption and suppresses the occurrence of a lamp image. Moreover, another object of the present invention is to provide a display device having such a lighting device, and further a television receiver having such a display device.

### Means for Solving the Problem

In order to solve the above problem, a lighting device of the present invention includes a plurality of linear light sources disposed in parallel, a chassis housing the linear light sources and having an opening through which light from the linear light sources exits, and an optical member facing the linear light sources and disposed to cover the opening. The chassis is defined in a light source high-density region and a light source low-density region, and the linear light sources are arranged at relatively small intervals in the light source high-density region and the light sources are arranged at relatively large intervals in the light source low-density region. The optical member includes a light reflection portion at least in a portion overlapping with the light source low-density region and configured to reflect light from the linear light sources in the light source low-density region.

In this manner, the linear light sources are disposed at small intervals in the light source high-density region and at large intervals in the light source low-density region. This reduces the number of the linear light sources compared with a case where the light source high-density region is provided over the entire chassis. This achieves cost reduction and power saving. If the light source low-density region is provided in this manner, the distance between the adjacent linear light sources becomes relatively long in the light source low-density region, and therefore light emitted from the linear light sources does not mix with each other and can easily reach the optical member. As a result, brightness in a portion overlapping with the linear light source on the optical member becomes locally high, and it is easy for a lamp image to occur. Hence, in the present invention, the light reflection portion that reflects light from the linear light source is formed at least in the portion of the optical member overlapping with the light source low-density region. Accordingly, most of light emitted from the linear light sources in the light source low-density region is once reflected by the light reflection portions toward the chassis. It is made possible for the reflected light to reflect in the chassis while mixing with each other, and reach the optical member again. Accordingly, it is possible to obtain substantially even brightness over the entire optical member, and it is made possible to suppress the occurrence of a lamp image.

The optical member may include the light reflection portion in a portion overlapping with the linear light source in planar view.
According to such a configuration, light emitted from the linear light sources securely reaches the light reflection portions, and is reflected by the light reflection portions on the chassis side while mixing with each other. This further suppresses the occurrence of a lamp image.

The light reflection portion may be longer in length in a lateral direction of the linear light source in planar view than the linear light source.
According to such a configuration, the light reflection portion reflects light emitted from the linear light source more securely. This further suppresses the occurrence of a lamp image.

The optical member may include the light reflection portion such that light reflectance of the optical member is highest in a portion overlapping with the light source low-density region.
According to such a configuration, a greatest amount of the light emitted from the linear light source is reflected in a portion of the optical member overlapping with the light source low-density region where a lamp image is most likely to occur. Accordingly, the light emitted from the linear light sources is easily mixed and the occurrence of a lamp image is suitably suppressed.

The optical member may include the light reflection portion on a surface facing the linear light source.
According to such a configuration, it is possible to securely reflect light that is to reach the optical member from the linear light source. This suppresses the occurrence of a lamp image.

The optical member may include the light reflection portion printed thereon.
In this manner, the light reflection portion is formed by printing. Therefore, an aspect of a pattern of the light reflection portions is appropriately designed and the pattern of the light reflection portions is easily formed as designed.

The chassis may include the light source high-density region in a middle portion thereof.
Such a configuration increases brightness in the middle portion of an irradiated surface of the lighting device. Hence, this also increases brightness in the middle portion of a display screen of a display device having the lighting device. The human eye usually directs attention to the middle portion of the display screen. Therefore, if brightness increases in the middle portion of the display screen, excellent visibility is obtained.

The chassis may include the light source low-density region in a portion located outside a middle portion thereof.
According to such a configuration, brightness may be lowered in an outer portion compared with the brightness in the middle portion of the irradiated surface of the lighting device. However, the human eye usually directs attention to the middle portion of the display screen, and therefore the number of the linear light sources is reduced with very little influence on the visibility, and this achieves cost reduction and power saving.

The light source high-density region may be smaller in area than the light source low-density region.
In this manner, the light source high-density region is made smaller in area than the light source low-density region and accordingly, the number of the linear light sources is further reduced and a great effect is expected in cost reduction and power saving.

The chassis may be rectangular in planar view, and the linear light sources may be disposed such that a longitudinal direction thereof corresponds to a long side direction of the chassis.
Such a configuration reduces the number of the linear light sources compared with a configuration where a short side direction of the chassis corresponds to the longitudinal direction of the linear light source. Hence, it is possible to reduce the number of control units controlling turning on and off of the linear light sources, for example and this achieves cost reduction.

The linear light source may be a cold cathode tube.
In this manner, service life of the light source is extended, and dimming is carried out easily.

The linear light source may be a hot cathode tube.
In this manner, brightness is improved.

The linear light sources may include point light sources arranged on an elongated board.
In this manner, the arrangement intervals of the linear light sources can be changed by preparing a plurality of kinds of boards having different arrangement densities of the point light sources or changing the arrangement intervals of the boards.

The lighting device may further include a diffuser lens configured to diffuse light from the point light sources, and the diffuser lens may be provided on a light exit side of the point light sources at least provided in the light source low-density region.
According to such a configuration, light emitted from the point light sources is firstly diffused by the diffuser lens. Accordingly, also if point light sources having high directivity of light are used, the directivity is mitigated. As a result, light from the adjacent point light sources mixes with each other also in the light source low-density region where the point light sources are disposed relatively sparsely, and this further suppresses the occurrence of a lamp image. Additionally, combined with the effect of the light reflection portion formed in the portion of the optical member overlapping with the light source low-density region, it is made possible to further suppress the occurrence of a lamp image in the light source low-density region.

The diffuser lens may be circular in planar view.
In this case, light from the point light sources is diffused by the diffuser lens substantially evenly at 360 degrees. This further suppresses the occurrence of a lamp image.

The diffuser lens may include a light incident surface and a light incident side recess formed on the light incident surface. The light incident surface may face the point light source and light from the point light source enters the light incident surface. The light incident side recess may be formed on a portion of the light incident surface overlapping with the point light source and recessed into an optical member side. The light incident side recess may have an inclined sidewall facing the point light source.
According to such a configuration, most of light emitted from the point light source enters the light incident side recess of the diffuser lens. Here, the light incident side recess has the inclined sidewalls facing the point light source. Hence, light entered the light incident side recess reaches the sidewalls, and can be refracted in the diffuser lens at a wide angle via the sidewalls (in other words, from the inside to the outside of the diffuser lens). Hence, it is possible to suppress a local increase in brightness in the portion of the diffuser lens overlapping with the point light source, and this further suppresses the occurrence of a lamp image.

The diffuser lens may include a light exit surface and a light exit side recess, and the light entering the light incident surface exits from the light exit surface. The light exit side recess may be formed on a portion of the light exit surface overlapping with the point light source and recessed into a point light source side.
In this case, light quantity from the point light source tends to become large in the portion of the light exit surface overlapping with the point light source compared to other portions, and brightness tends to become high locally. Therefore, the light exit side recess is formed in the portion of the light exit surface overlapping with the point light source and accordingly, light from the point light source is refracted by the light exit side recess at a wide angle or a part of the light from the point light source is reflected by the light exit side recess. Hence, it is possible to suppress a local increase in brightness in the portion of the light exit surface overlapping with the point light source, and the occurrence of a lamp image is further suppressed.

At least the light incident surface of the diffuser lens may be surface-roughened.
In this manner, surface roughening such as texturing may be applied to the diffuser lens and accordingly, light is diffused still more excellently.

The point light source may be an LED.
In this manner, service life of the light source is extended and power consumption is lowered.

The optical member may be a light diffusing member configured to diffuse light from the linear light sources.
In this case, light transmittance is controlled in each area of the optical member by changing the light reflectance distribution of the optical member. Also, the diffusing member diffuses light, and this further suppresses the occurrence of a lamp image in the lighting device.

Next, in order to solve the above problem, a display device of the present invention includes the above lighting device and a display panel configured to perform display by use of light from the lighting device.
According to such a display device, it is made possible in the lighting device to reduce cost and suppress the occurrence of a lamp image, and accordingly, it is made possible also in the display device to reduce cost and realize excellent display that the occurrence of a lamp image is suppressed.

The display panel may be a liquid crystal panel. As a liquid crystal display device, such a display device can be applied to various uses such as the displays of a television set and a personal computer, and is suitable especially for a large screen.

Moreover, a television receiver of the present invention includes the above display device.
According to such a television receiver, it is made possible to provide a device that is excellent in visibility.

### Advantageous Effect of the Invention

According to a lighting device of the present invention, it is made possible to achieve cost reduction and the suppression of power consumption and obtain substantially even illumination light that a lamp image hardly occurs. Moreover, a display device of the present invention includes such a lighting device and accordingly, it is made possible to reduce cost and realize excellent display. Moreover, a television receiver of the present invention includes such a display device and accordingly, it is made possible to provide a device that is excellent in visibility.

### BRIEF DESCRIPTION OF THE DRAWINGS

FIG. 1 is an exploded perspective view of a schematic configuration of a television receiver according to a first embodiment of the present invention;
FIG. 2 is an exploded perspective view of a schematic configuration of a liquid crystal display device included in the television receiver;
FIG. 3 is a cross-sectional view of a cross-sectional configuration taken along the short side direction of the liquid crystal display device;
FIG. 4 is a cross-sectional view of a cross-sectional configuration taken along the long side direction of the liquid crystal display device;
FIG. 5 is a plan view of an arrangement configuration of cold cathode tubes in a chassis included in the liquid crystal display device;
FIG. 6 is a schematic drawing of an arrangement aspect of light reflection portions formed on a surface of a diffuser plate included in a backlight unit facing the cold cathode tubes;
FIG. 7 is a graph illustrating changes in light reflectance in the short side direction of the diffuser plate of FIG. 6;
FIG. 8 is a schematic drawing of a modification of an arrangement aspect of the light reflection portions formed on the surface of the diffuser plate facing the cold cathode tubes;
FIG. 9 is a plan view of an arrangement configuration of the cold cathode tubes arranged in a chassis;
FIG. 10 is an exploded perspective view of a schematic configuration of a television receiver according to a second embodiment;
FIG. 11 is a cross-sectional view of a cross-sectional configuration taken along the short side direction of a liquid crystal display device included in the television receiver of FIG. 10;
FIG. 12 is a plan view of an arrangement configuration of LED boards in the chassis included in the liquid crystal display device;
FIG. 13 is a schematic drawing of an arrangement aspect of light reflection portions formed on a surface facing the LED board on a diffuser plate included in a backlight unit;
FIG. 14 is a cross-sectional view of a schematic configuration of LED light sources disposed on the LED board;
FIG. 15 is a cross-sectional view of a modification of an arrangement aspect of the light reflection portions formed on the diffuser plate included in the liquid crystal display device;
FIG. 16 is a graph illustrating changes in light reflectance in the short side direction of the diffuser plate included in the liquid crystal display device of FIG. 15;
FIG. 17 is a cross-sectional view of a modification of a schematic configuration of the LED light sources included in the liquid crystal display device;
FIG. 18 is a plan view of an arrangement configuration of the LED boards in the chassis included in the liquid crystal display device of FIG. 16; and
FIG. 19 is a cross-sectional view of a modification of a schematic configuration of the LED light sources and an arrangement aspect of the light reflection portions formed on the diffuser plate, which are included in the liquid crystal display device.

### BEST MODE FOR CARRYING OUT THE INVENTION

### <First embodiment>

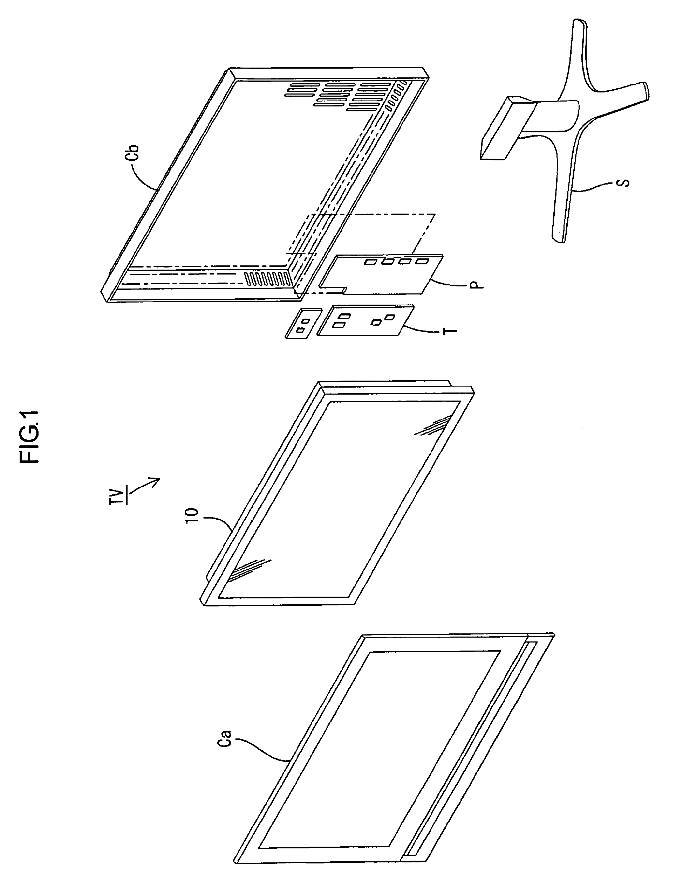

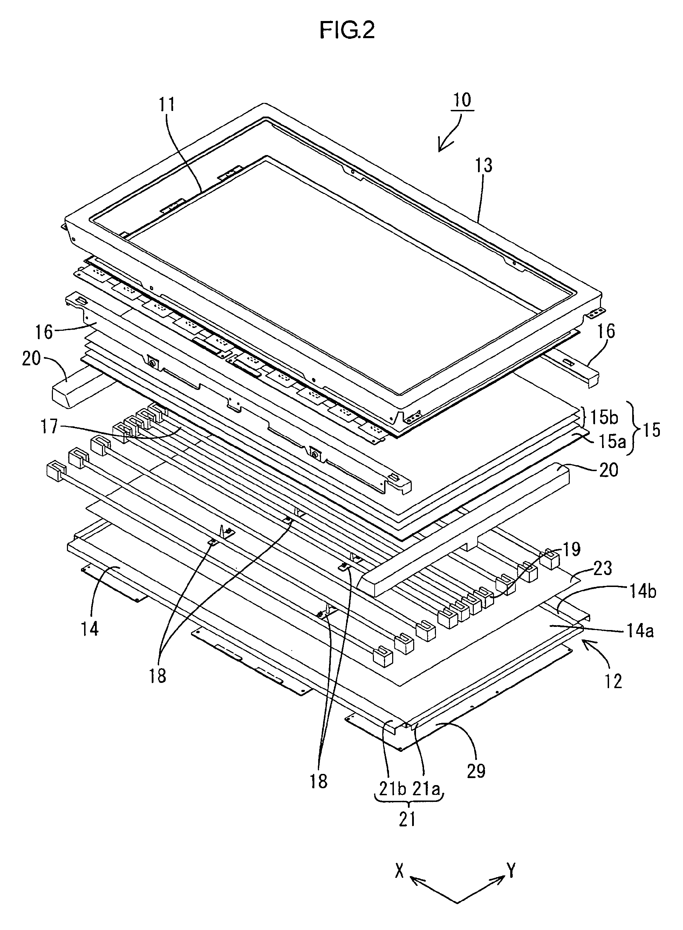

A description will be given of a first embodiment of the present invention with reference to FIGs. 1 to 7.
Firstly, a description will be given of the configuration of a television receiver TV including a liquid crystal display device 10.
As shown in FIG. 1, the television receiver TV according to the present embodiment includes the liquid crystal display device 10, both front and rear cabinets Ca and Cb housing the liquid crystal display device 10 interposed therebetween, a power source P, a tuner T, and a stand S. The liquid crystal display device (display device) 10 is a horizontally long square shape as a whole, and is housed in a vertical position. As shown in FIG. 2, the liquid crystal display device 10 includes a liquid crystal panel 11 being a display panel and a backlight unit (lighting device) 12 being an external light source, and they are integrally held by a frame-shaped bezel 13 and the like.

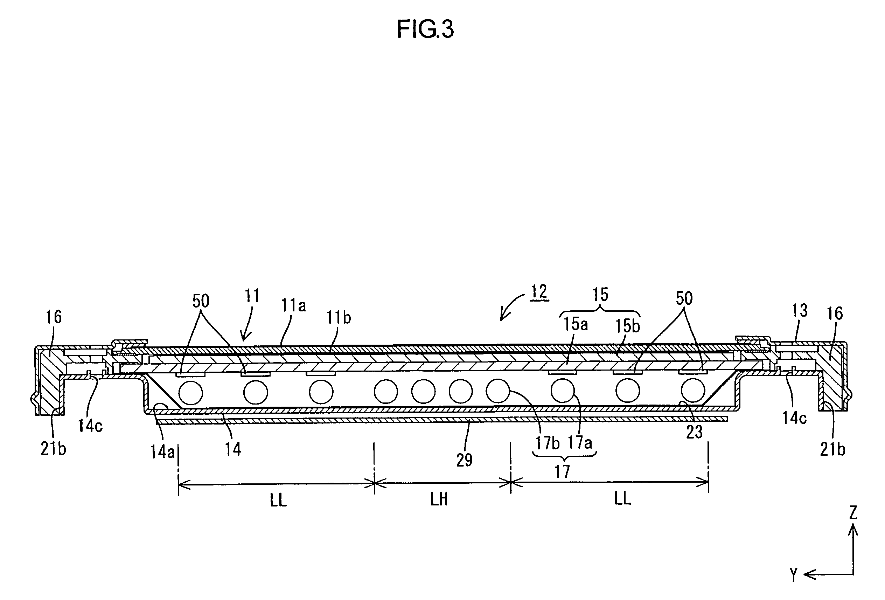

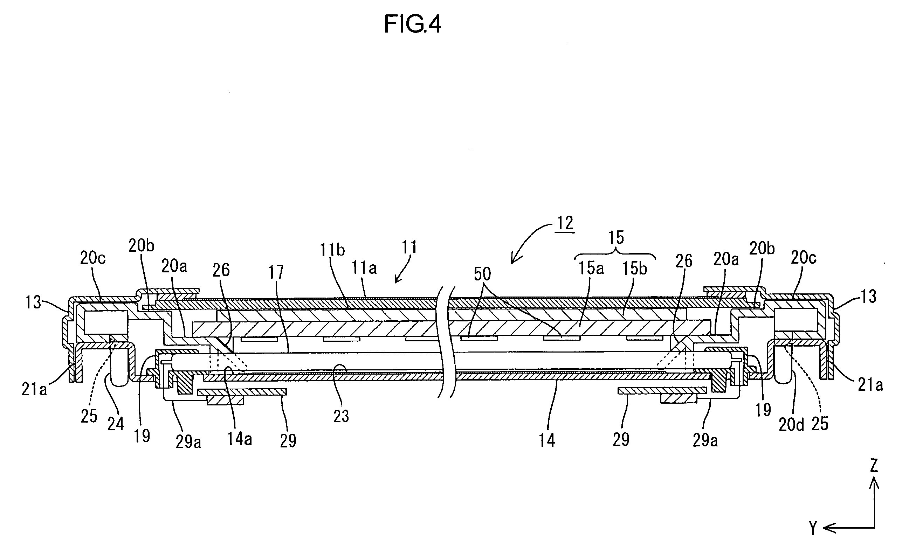

Next, a description will be given of the liquid crystal panel 11 and the backlight unit 12, which are included in the liquid crystal display device 10 (see FIGs. 2 to 4).
In the liquid crystal panel (display device) 11, a pair of glass substrates is bonded together with a predetermined gap therebetween and a liquid crystal is filled therebetween. On one of the glass substrates, a switching component (TFT, for example) connected to source and gate lines that are orthogonal to each other, a pixel electrode connected to the switching component, an alignment film, and the like are disposed, and on the other glass substrate, a color filter where color sections such as R (red), G (green) and B (blue) are disposed in predetermined arrangement, a counter electrode, an alignment film and the like are disposed. Polarizing plates 11a and 11b are disposed on the exterior of both of the substrates (see FIGs. 3 and 4).

As shown in FIG. 2, the backlight unit 12 includes a substantially box-shaped chassis 14 having an opening 14b on a light emitting surface side (liquid crystal panel 11 side), an optical sheet group 15 (a diffuser plate (optical member, light diffusing member) 15a and a plurality of optical sheets 15b disposed between the diffuser plate 15a and the liquid crystal panel 11) disposed so as to cover the opening 14b of the chassis 14, and frames 16 disposed along the long sides of the chassis 14 and sandwiching and holding the long side edges of the diffuser plate 15a in between with the chassis 14. Furthermore, included in the chassis 14 are cold cathode tubes (linear light sources) 17, lamp clips 18 configured to install the cold cathode tubes 17 on the chassis 14, relay connectors 19 serving as relays of electrical connection at the respective ends of the cold cathode tube 17, and holders 20 covering the ends of the group of the cold cathode tubes 17 and the group of the relay connectors 19 all together. In the backlight unit 12, a light output side is defined on a side closer to the diffuser plate 15a with respect to the cold cathode tubes 17.

The chassis 14 is made of metal, and as shown in FIGs. 3 and 4, is formed by sheet metal forming processes into a shallow and substantially box shape including a rectangular bottom plate 14a and folded outer edges 21 standing from the sides thereof and folded into a substantially U-shape (folded outer edges 21a in the short side direction and folded outer edges 21b in the long side direction). Furthermore, as shown in FIG. 3, the chassis 14 has fixing holes 14c in top surfaces of the folded outer edges 21b thereof, and it is made possible to combine the bezel 13, the frames 16, the chassis 14 and the like into a single unit by screws, for example.

A reflection sheet 23 is disposed on an inner surface side of the bottom plate 14a of the chassis 14 (on the side of a surface facing the cold cathode tubes 17). The reflection sheet 23 is made of synthetic resin, and a surface thereof is white that is excellent in light reflectance. The reflection sheet 23 is laid along the inner surface of the bottom plate 14a of the chassis 14 so as to cover the almost entire inner surface. As shown in FIG. 3, the long side edges of the reflection sheet 23 are in a state of standing so as to cover the folded outer edges 21b of the chassis 14, and being sandwiched between the chassis 14 and the diffuser plate 15a. The reflection sheet 23 makes it possible to reflect light emitted from the cold cathode tubes 17 on the diffuser plate 15a side.

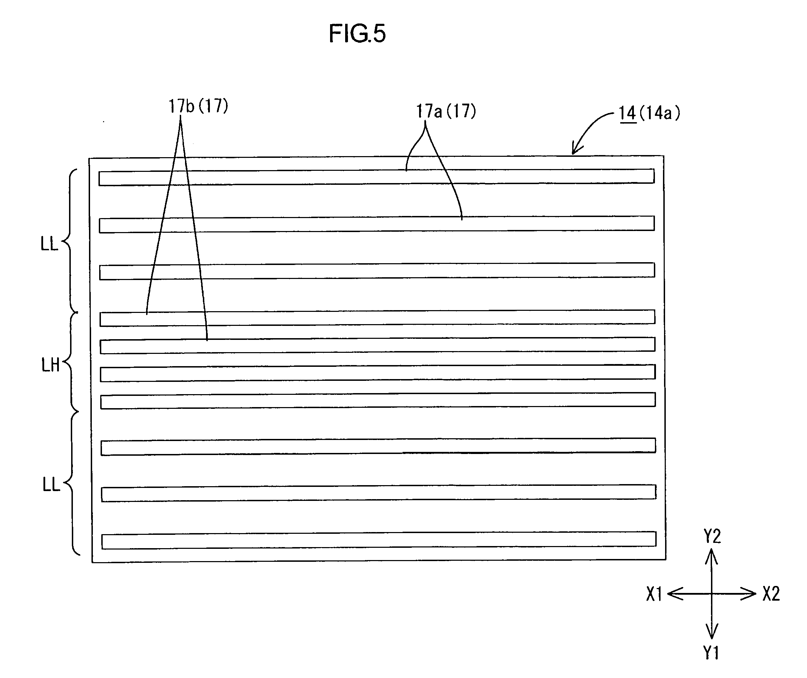

The cold cathode tube 17 is a linear light source, and ten cold cathode tubes 17 are disposed in parallel in the chassis 14 such that a longitudinal direction (axis direction) thereof corresponds to the long side direction of the chassis 14. More specifically, as shown in FIGs. 3 and 5, the cold cathode tubes 17 are disposed to form a light source high-density region LH where the arrangement intervals are relatively narrow in the middle portion of the bottom plate 14a (a section facing the diffuser plate 15a) of the chassis 14, and the arrangement intervals are constant in the light source high-density region LH. Moreover, the cold cathode tubes 17 are disposed to form light source low-density regions LL where the arrangement intervals are relatively wide in the outer portions located on outer sides than the middle portion of the bottom plate 14a, and the arrangement intervals are constant in the light source low-density regions LL. In this manner, the arrangement intervals of the cold cathode tubes 17 are made constant in each of the light source high-density region LH and the light source low-density regions LL, respectively. Accordingly, it becomes easy to design a light reflection portion 50 of the diffuser plate 15a that will be described later and also only two kinds of the lamp clips 18 are necessary to be prepared. This contributes to cost reduction. Here, the area of the light source high-density region LH located in the middle portion of the bottom plate 14a of the chassis 14 is smaller than that of the light source low-density regions LL located in the outer portions of the bottom plate 14a. In the embodiment, cold cathode tubes disposed in the light source high-density region LH are illustrated as high density side cold cathode tubes 17b, and cold cathode tubes disposed in the light source low-density regions LL as low density side cold cathode tubes 17a.

As shown in FIGs. 3 to 5, inverter boards 29 are installed on an outer surface side (a side opposite to the side where the cold cathode tubes 17 are disposed) of the bottom plate 14a of the chassis 14, and drive power is supplied from the inverter boards 29 to the cold cathode tubes 17. A terminal (not shown) receiving drive power is provided at each end of the cold cathode tube 17, and the terminal is electrically connected to a harness 29a extending from the inverter board 29 to enable the supply of high-voltage drive power. Such electrical connection is made in the relay connector 19 into which the end of the cold cathode tube 17 is fitted, and the holder 20 is installed so as to cover the relay connectors 19.

The holder 20 covering the ends of the cold cathode tubes 17 and the relay connectors 19 is made of synthetic resin in white, and as shown in FIG. 2, is a long and substantially box shape extending along the short side direction of the chassis 14. As shown in FIG. 4, the holder 20 includes, on a front surface side thereof, a stepwise surface configured to mount the diffuser plate 15a and the liquid crystal panel 11 on different levels as well as is disposed in a state of being partially overlapping with the folded outer edge 21a in the short side direction of the chassis 14 to form a side wall of the backlight unit 12 together with the folded outer edge 21a. An insertion pin 20d protrudes from a surface facing the folded outer edge 21a of the chassis 14 on the holder 20, and the insertion pin 20d is inserted into an insertion hole 25 formed in a top surface of the folded outer edge 21a of the chassis 14; accordingly, the holder 20 is installed on the chassis 14.

The stepwise surface of the holder 20 covering the ends of the cold cathode tubes 17 has three planes in parallel with the bottom plate 14a of the chassis 14, and the short side edge of the diffuser plate 15a is mounted on a first plane 20a located on the lowest level. Furthermore, an inclined cover 26 inclining toward the bottom plate 14a of the chassis 14 extends from the first plane 20a. The short side edge of the liquid crystal panel 11 is mounted on a second plane 20b of the stepwise surface of the holder 20. A third plane 20c located on the highest level of the stepwise surface of the holder 20 is disposed in a position overlapping with the folded outer edge 21a of the chassis 14, and is in contact with the bezel 13.

The optical sheet group 15 including the diffuser plate (optical member, light diffusing member) 15a and the optical sheets 15b is disposed on the opening 14b side of the chassis 14. The diffuser plate 15a is formed by dispersing and mixing light scattering particles in a plate-shaped member made of synthetic resin, and has a function of diffusing linear light emitted from the cold cathode tubes 17 (17a and 17b) being linear light sources as well as a light reflection function of reflecting outgoing light of the cold cathode tubes 17.

The optical sheets 15b disposed on the diffuser plate 15a include a diffuser sheet, a lens sheet, a reflection type polarizing plate, which are laminated sequentially from the diffuser plate 15a side, and have a function of converting light emitted from the cold cathode tube 17 and passing through the diffuser plate 15a into surface light. The liquid crystal panel 11 is installed on the top surface side of the optical sheets 15b, and the optical sheets 15b are held between the diffuser plate 15a and the liquid crystal panel 11.

Here, a description will be given of the light reflection function of the diffuser plate 15a and an aspect of forming the light reflection portions with reference to FIGs. 3 to 6. In FIGs. 3 to 6, the long side direction of the diffuser plate is set to the X-axis direction, the short side direction thereof to the Y-axis direction, and the thickness direction thereof to the Z-axis direction.

The light reflection portions 50 arranged in a white dot pattern are formed on the surface on the side facing the cold cathode tubes 17 on the diffuser plate 15a. In the embodiment, the dot of the light reflection portion 50 is a round shape. The dot pattern of the light reflection portions 50 is formed by printing a paste containing metallic oxide (such as titanium oxide), for example, on the surface of the diffuser plate 15a. As printing means, screen printing, inkjet printing, and the like are suitable.

The light reflectance of the light reflection portion 50 on the surface facing the cold cathode tube 17 is 80%. On the other hand, the light reflectance of the diffuser plate 15a is 30%. Thus, the light reflection portion 50 has the light reflectance relatively higher than the light reflectance of the diffuser plate 15a. In other words, the light reflectance of the diffuser plate 15a in the section where the light reflection portions 50 are formed is higher than in a section where the light reflection portions 50 are not formed. Here, in the embodiment, used for the light reflectance of each material is an average light reflectance within a measurement area measured in LAV (measurement diameter φ25.4 mm) of CM-3700d manufactured by Konica Minolta Holdings, Inc. The light reflectance of the light reflection portion 50 itself is a value measured based on the measurement means on a surface where the light reflection portions 50 are formed over an entire surface of the glass substrate. The light reflectance of the light reflection portion 50 itself is preferably 80% or more, and is more preferably 90% or more. In this manner, as the light reflectance of the light reflection portion 50 becomes higher, the pattern aspects (number, area and the like) of the dot pattern makes it possible to control the degree of reflection more minutely and precisely.

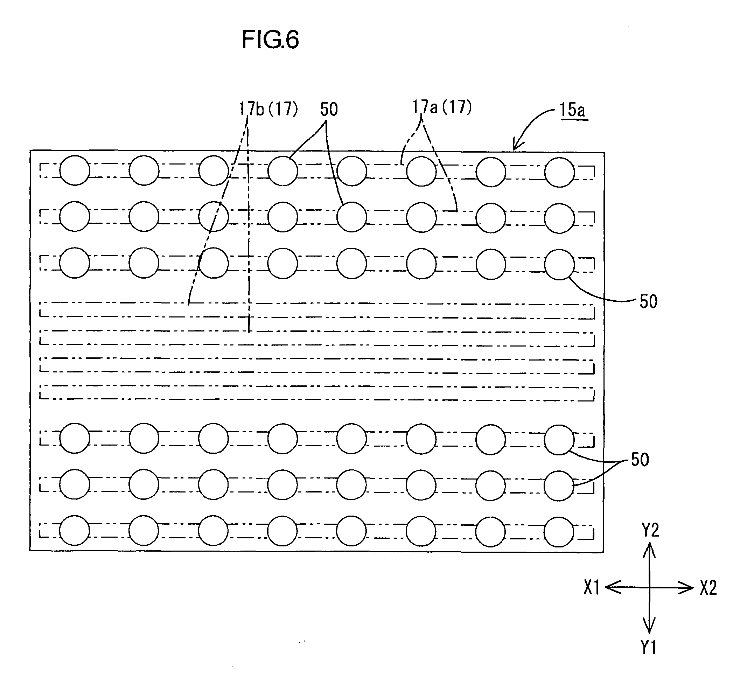

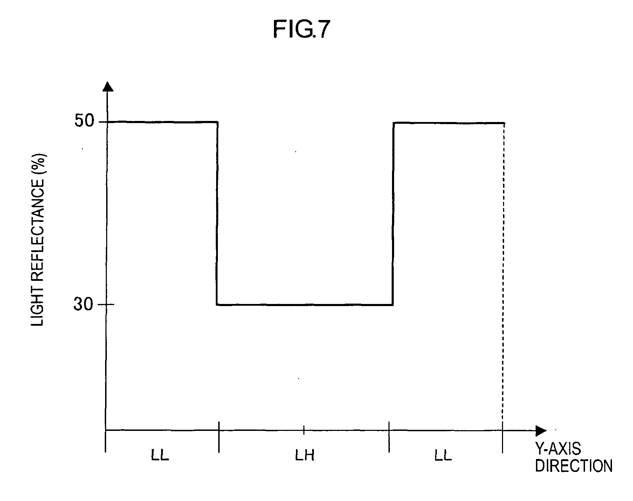

In the embodiment, the light reflection portions 50 are disposed at least in the portion of the diffuser plate 15a overlapping with the light source low-density region LL, and are formed especially in positions overlapping with the low density side cold cathode tubes 17a in planar view. Moreover, as shown in FIG. 6, viewed from the lateral direction of the cold cathode tube 17, the length of the light reflection portion 50 in planar view (here, the diameter of the light reflection portion 50) is longer than that of the cold cathode tube 17 in planar view. According to such an arrangement aspect of the light reflection portions 50, as shown in FIG. 7, the light reflectance of the diffuser plate 15a on the surface facing the cold cathode tube 17 is constant at 30% in the section overlapping with the high light density region LH while being constant at 50% in the section overlapping with the light source low-density region LL. In other words, the light reflectance of the diffuser plate 15a is highest in the section overlapping with the low light source density LL.

As described above, the description has been given of the configuration of the liquid crystal display device 10 included in the television receiver TV of the first embodiment; and subsequently, a description will be given of operations and effects revealed by the configuration.
Firstly, in the embodiment, the backlight unit 12 includes a plurality of cold cathode tubes 17 (17a and 17b) disposed in parallel, and the cold cathode tubes 17 are disposed at relatively small intervals in the light source high-density region LH the cold cathode tubes 17 are disposed at relatively large intervals in the light source low-density regions LL. The light reflection portions 50 reflecting light from the cold cathode tubes 17 (low density side cold cathode tubes 17a) are formed at least in the section overlapping with the light source low-density regions LL on the diffuser plate 15a. In this manner, the cold cathode tubes 17 are disposed at relatively small intervals in the light source high-density region LH and disposed at relatively large intervals in the light source low-density regions LL. Accordingly, the number of cold cathode tubes 17 can be reduced compared with a configuration where the light source high-density region LH is formed over the entire chassis 14, and cost reduction and power saving are achieved.

If the light source low-density regions LL are formed, the distance between the adjacent cold cathode tubes 17 and 17 (17a and 17a) becomes relatively long in the light source low-density regions LL. Accordingly, light emitted from the cold cathode tubes 17 (17a) does not mix with each other and is easy to reach the diffuser plate 15a. As a result, brightness becomes locally high in the portion of the diffuser plate 15a overlapping with the cold cathode tube 17 (17a), and a lamp image occurs easily. Hence, in the embodiment, the light reflection portions 50 reflecting light from the cold cathode tubes 17 (17a) are formed at least in the portion of the diffuser plate 15a overlapping with the light source low-density regions LL. Hence, most of light emitted from the cold cathode tubes 17 (17a) in the light source low-density regions LL is once reflected by the light reflection portions 50 toward the chassis 14. The reflected light is reflected in the chassis 14 with mixing with each other, and reaches the diffuser plate 15a again. Hence, substantially even brightness is obtained over the entire diffuser plate 15a, and this suppresses the occurrence of a lamp image.

Moreover, in the embodiment, the light reflection portions 50 are formed in the portions of the diffuser plate 15a overlapping with the cold cathode tubes 17 (17a) in planar view. Hence, light emitted from the cold cathode tubes 17 (17a) securely reaches the light reflection portions 50 and is reflected by the light reflection portions 50 toward the chassis 14 with mixing with each other. This further suppresses the occurrence of a lamp image.

Moreover, in the lateral direction of the cold cathode tube 17 (17a), the length of the light reflection portion 50 in planar view is longer than that of the cold cathode tube 17 (17a) in planar view. Therefore, the light reflection portion 50 more securely reflects light emitted from the cold cathode tube 17 (17a). This further suppresses the occurrence of a lamp image.

Moreover, the light reflection portion 50 is formed such that the light reflectance of the diffuser plate 15a is highest in the portion of the diffuser plate 15a overlapping with the light source low-density region LL. In this case, the greatest amount of light from the cold cathode tube 17 (17a) is reflected in the portion of the diffuser plate 15a overlapping with the light source low-density region LL where a lamp image occurs easily. This facilitates the mixing of light from the cold cathode tubes 17 (17a) and suitably suppresses the occurrence of a lamp image.

Moreover, the light reflection portion 50 is formed on the surface of the diffuser plate 15a facing the cold cathode tube 17 (17a). Hence, it is possible to securely reflect light reaching the diffuser plate 15a from the cold cathode tube 17 (17a), and this securely suppresses the occurrence of a lamp image.

Moreover, the light reflection portion 50 is formed by being printed on the diffuser plate 15a. Hence, it is possible to appropriately design an aspect of the pattern of the light reflection portions 50 and easily form the pattern of the light reflection portions 50 as designed.

Moreover, the light source high-density region LH is formed in the middle portion of the chassis 14. Hence, brightness is increased in the middle portion of the irradiated surface of the backlight unit 12. As a result, brightness increases also in the middle portion of the display screen in the liquid crystal display device 10. The human eye usually directs attention to the middle portion of the display screen. Accordingly, excellent visibility is obtained by increasing brightness in the middle portion of the display screen.

Moreover, the light source low-density regions LL are formed in the outer portions located outside the middle portion of the chassis 14. According to such a configuration, brightness may decrease in the outer portions compared with in the middle portion of the irradiated surface of the backlight unit 12. However, the human eye usually directs attention to the middle portion of the display screen. This reduces the number of the cold cathode tubes 17 with very little influence on the visibility and also achieves cost reduction and power saving.

Moreover, the light source high-density region LH is smaller in area than the light source low-density regions LL. The light source high-density region LH is made smaller in area than the light source low-density regions LL. This further reduces the number of the cold cathode tubes 17.

Moreover, the chassis 14 is rectangular in planar view, and the cold cathode tube 17 is disposed such that a longitudinal direction thereof corresponds to the long side direction of the chassis 14. Hence, it is made possible to reduce the number of the cold cathode tubes 17 compared with a configuration where the short side direction of the chassis 14 corresponds to the longitudinal direction of the cold cathode tube 17. This reduces the number of control units controlling turning on and off of the cold cathode tubes 17, for example, and this achieves cost reduction.

Moreover, the diffuser plate 15a is a light diffusing member diffusing light from the cold cathode tubes 17. In this case, light transmittance is controlled by changing the light reflectance distribution of the diffuser plate 15a for each region of the diffuser plate 15a and also the light diffusing member diffuses light from the cold cathode tubes 17. This further suppresses the occurrence of a lamp image in the backlight unit 12.

Moreover, the cold cathode tube is adopted as a linear light source. This extends service life of the light source and dimming is carried out easily.

As described above, the first embodiment of the present invention has been presented. However, the present invention is not limited to the above embodiment, and for example, various modifications shown below can be adopted. In the following modifications, the same reference numerals are assigned to the same structural elements and structural members as those of the above embodiment, and descriptions thereof will be omitted.

### <First modification of first embodiment>

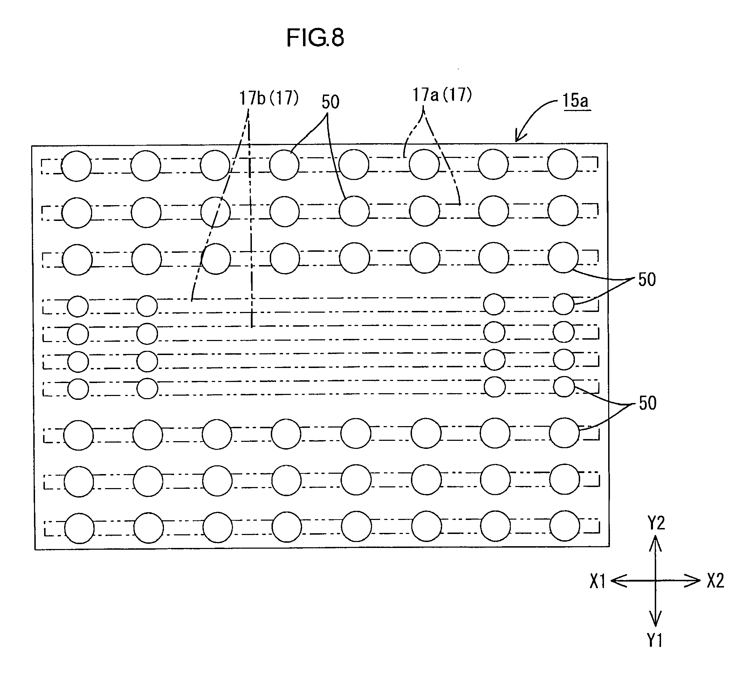

As a modification of an arrangement aspect of the light reflection portions 50 on the diffuser plate 15a, it is possible to adopt the one shown in FIG. 8. FIG. 8 is a schematic drawing of a modification of an arrangement aspect of the light reflection portions formed on the surface facing the cold cathode tubes on the diffuser plate.
As shown in FIG. 8, the diffuser plate 15a in this modification includes the light reflection portions 50 at least in positions facing the cold cathode tubes 17 (17a and 17b) not only in the sections overlapping with the light source low-density regions LL but also in the section overlapping with the light source high-density region LH. In this case, the light reflection portion 50 is smaller in the area of a dot in the section overlapping with the light source high-density region LH than in the section overlapping with the light source low-density region LL and/or is smaller in the density of dots than in the section overlapping with the light source low-density region LL. Hence, the light reflectance of the diffuser plate 15a is smaller on the light source high-density region LH side than on the light source low-density region LL side.

In the configuration of this modification, brightness is ensured in the middle portion of the backlight unit 12 and the number of the cold cathode tubes 17 is reduced, and this achieves cost reduction. Additionally, especially since the light reflection portions 50 are formed in the outer portions where the number of the cold cathode tubes 17 is reduced, the occurrence of uneven brightness is suppressed. Moreover, the light reflection portions 50 are partially formed in the middle portion and this also suppresses the occurrence of uneven brightness in the middle portion. Such a configuration is suitable especially for a case where it is desired to increase brightness in the middle portion of the display surface of the liquid crystal display device 10.

### <Second modification of first embodiment>

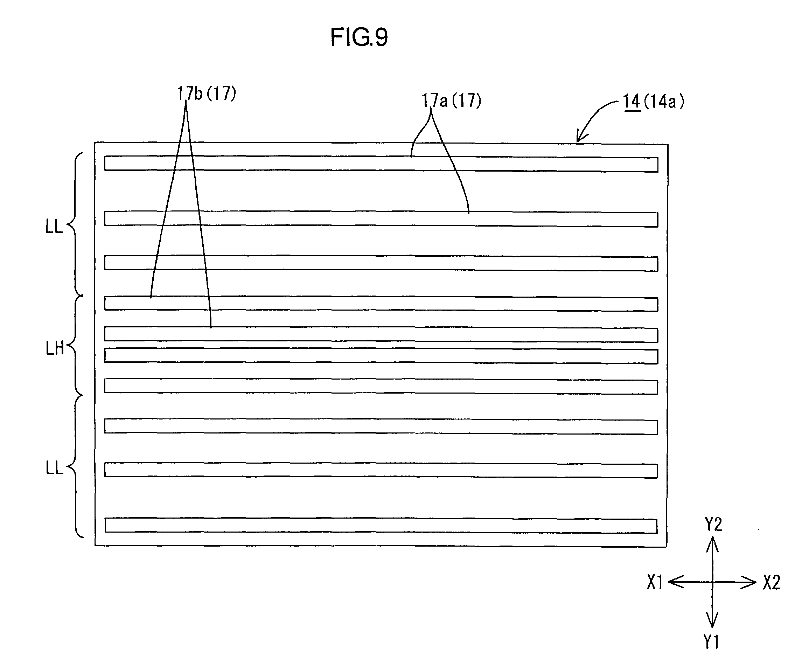

As a modification of an arrangement aspect of the cold cathode tubes 17, it is possible to adopt the one shown in FIG. 9. FIG. 9 is a plan view of an arrangement configuration of the cold cathode tubes arranged in the chassis.
The chassis 14 includes the light source high-density region LH formed in the middle portion thereof and the light source low-density regions LL formed in the outer portions thereof. Here, in this modification, the arrangement intervals of the high density side cold cathode tubes 17b become continuously wider in the light source high-density region LH toward a direction away from the center line of the short side direction of the chassis 14. Furthermore, the arrangement intervals of the low density side cold cathode tubes 17a become continuously wider in the light source low-density regions LL toward the direction away from the center line of the short side direction of the chassis 14. In other words, if the entire chassis 14 is viewed, the arrangement intervals of the cold cathode tubes 17 become continuously and progressively wider as is farther away from the center of the short side direction of the chassis 14.

Also in the configuration of this modification, it the number of the cold cathode tubes 17 is reduced and cost reduction is achieved. Especially since the arrangement intervals of the cold cathode tubes 17 (17a and 17b) become continuously and progressively wider as is farther away from the center of the short side direction of the chassis 14, uneven brightness is difficult to occur in the entire backlight unit 12.

### <Second embodiment>

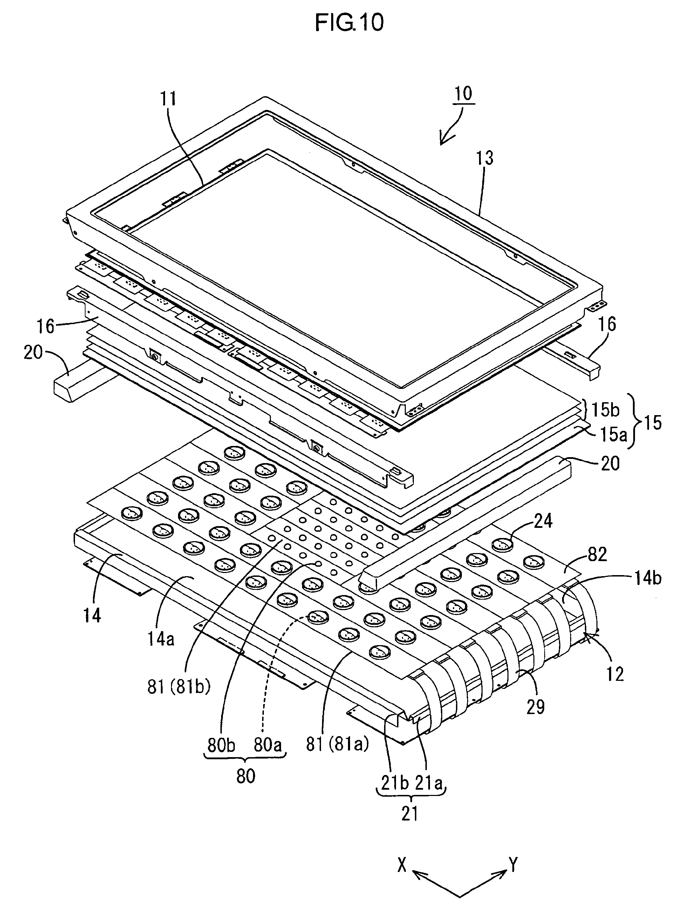

Next, a description will be given of a second embodiment of the present invention with reference to FIGs. 10 to 14.
In the liquid crystal display device 10 included in the television receiver TV of the second embodiment, a light source is different from the one in the first embodiment, and the others are similar to the first embodiment. The same reference numerals are assigned to the same parts as the first embodiment, and the overlapped description will be omitted.

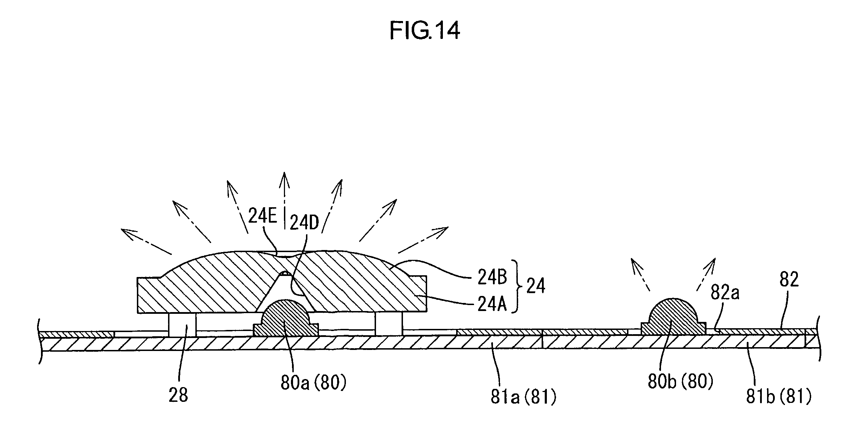

As shown in FIG. 10, the backlight unit 12 adopted in the second embodiment includes, in the chassis 14, LED boards (boards) 81 having LED point light sources (point light sources) 80. The LED board 81 is an elongated thin plate-shaped member that is made of resin and is a strip shape. It is possible to adopt one having flexibility such as what is called an LED tape as the LED board 81, and the LED board 81 is fixed to the bottom plate 14a of the chassis 14 by a double-sided tape (not shown) attached to the rear surface of the LED board 81 (the side opposite to the side where the LED light sources 80 are disposed). A plurality of the LED boards 81 is disposed in alignment in the plane such that a longitudinal direction thereof corresponds to the long side direction of the chassis 14. Each LED bard 81 includes a reflection sheet 82 and a plurality of LED light sources 80. The reflection sheet 82 is laid on the surface of the LED board 81 on the light exit side, that is, on the side of the surface facing the diffuser plate 15a. Each of the LED light sources 80 is disposed so as to be surrounded by the reflection sheet 82, in other words, to be exposed from an openings 82a (see FIG. 14) formed in the reflection sheet 82. In this manner, in the embodiment, the plurality of LED light sources 80 is disposed on the elongated LED board 81 to form a linear light source.

The reflection sheet 82 formed on the LED board 81 is made of synthetic resin, and a surface thereof is white that is excellent in light reflectance. The reflection sheet 82 is laid along the inner surface of the bottom plate 14a of the chassis 14 so as to cover the almost entire inner surface. The reflection sheet 82 reflects light emitted from the LED light sources 80 toward the diffuser plate 15a.

The LED boards 81 are classified into a high density side LED board 81b where the arrangement intervals of the LED light sources 80 are relatively narrow and a low density side LED board 81a where the arrangement intervals of the LED light sources 80 are relatively wide. As shown in FIGs . 11 and 12, the high density side LED boards 81b are disposed in a middle portion of the chassis 14 to form a light source high-density region LH where the arrangement intervals of the LED light sources 80 are relatively narrow. On the other hand, the low density side LED boards 81a are disposed in an outer portion located on an outer side than the middle portion of the chassis 14 to form a light source low-density region LL where the arrangement intervals of the LED light sources 80 are relatively wide. The area of the light source high-density region LH located in the middle portion of the chassis 14 is smaller than that of the light source low-density region LL located in the outer portion of the chassis 14. The LED light sources disposed in the light source high-density region LH are illustrated as high density side LED light sources 80b, and the LED light sources disposed in the light source low-density region LL as low density side LED light sources 80a.

The LED light sources 80 (80a and 80b) emit white light, and the LED light source 80 may include, for example, three kinds of red, green and blue surface-mounted LED chips (not shown), or a blue LED chip combined with a yellow phosphor.

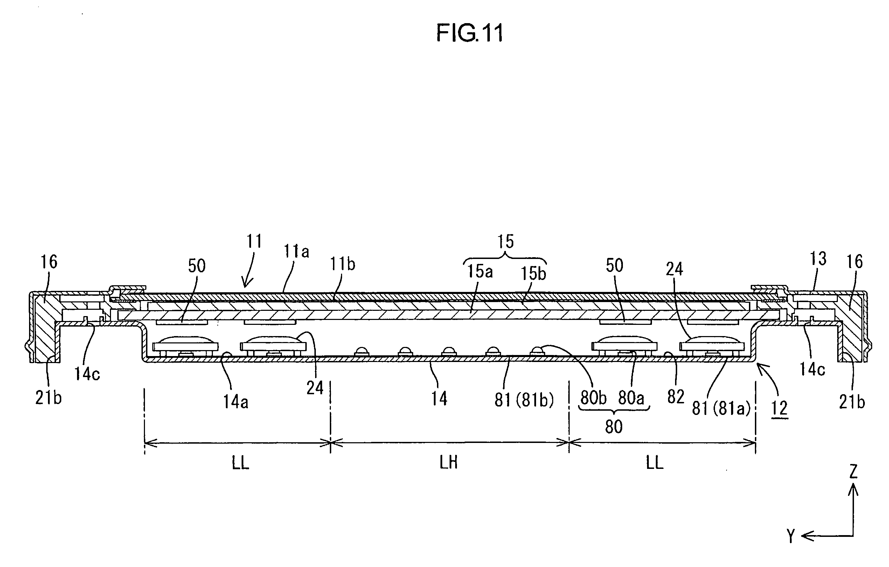

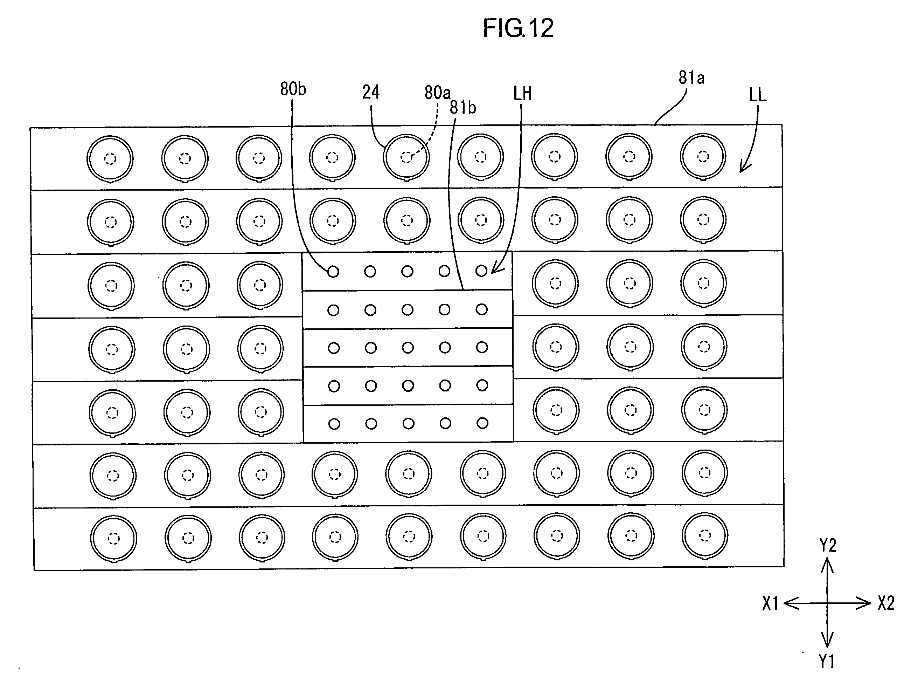

Moreover, as shown in FIGs. 11 and 12, the low density side LED light source 80a among the LED light sources 80 is covered by a diffuser lens 24 configured to diffuse light emitted from the low density side LED light source 80a. The high density side LED light source 80b is not covered by the diffuser lens 24.
The diffuser lens 24 is formed of a transparent member having a higher refractive index than air (for example, acryl or polycarbonate), and serves a function of diffusing light emitted from the low density side LED light source 80a by refracting the light. The diffuser lens 24 is circular in planar view, and the low density side LED light source 80a is disposed in the center thereof. As shown in FIG. 14, the diffuser lens 24 is disposed so as to cover the front side of the low density side LED light source 80a. The diffuser lens 24 includes a base portion 24A shaped into a circular flat plate in planar view and a flat domed portion 24B shaped into a flat dome. In the vicinity of the peripheral edge of the diffuser lens 24, three leg portions 28 are provided in a protruding manner to the rear-surface side, for example. The three leg portions 28 are disposed at substantially regular intervals (approximately 120 degree intervals) from the center portion of the diffuser lens 24 in planar view, and are bonded to the LED board 81 with adhesive, thermosetting resin, or the like.

A light incident side recess 24D is formed on a lower surface (on the low density side LED light source 80a side) of the diffuser lens 24. A portion of the lower surface of the diffuser lens 24 corresponding to immediately above the low density side LED light source 80a is recessed into the front side (the upper side of FIG. 14, that is, the diffuser plate 15a side) to form the light incident side recess 24D having a substantially conical shape. The light incident side recess 24D has an inclined sidewall facing the low density side LED light source 80a. Moreover, surface roughening such as texturing has been applied to the undersurface (the low density side LED light source 80a side) of the diffuser lens 24. Moreover, a light emitting side recess 24E having a substantially mortar shape is formed in the top (apex on the side facing the diffuser plate 15a (that is, the light emitting side)) of the diffuser lens 24. The inner peripheral surface of the light emitting side recess 24E is arc-shaped in cross-sectional view. As shown in FIG. 14, such a configuration refracts light from the low density side LED light source 80a at a wide angle on the border between the diffuser lens 24 and air, and diffuses the light in the environs of the low density side LED light source 80a.

On the other hand, the optical sheet group 15 including the diffuser plate 15a and the optical sheets 15b is disposed on the opening 14b side of the chassis 14 (see FIGs. 10 and 11). A description will hereinafter be given of the light reflection function of the diffuser plate 15a and an aspect of forming the light reflection portions with reference to FIGs. 10 to 12. In FIGs. 10 to 12, the long side direction of the diffuser plate is set to the X-axis direction, the short side direction thereof to the Y-axis direction, and the thickness direction thereof to the Z-axis direction.

The light reflection portions 50 arranged in a white dot pattern are formed on the surface of the diffuser plate 15a facing the LED light sources 80. In the embodiment, the dot of the light reflection portion 50 is a round shape. The dot pattern of the light reflection portions 50 is formed by printing a paste containing metallic oxide (such as titanium oxide), for example, on the surface of the diffuser plate 15a. As printing means, screen printing, inkjet printing, and the like are suitable.

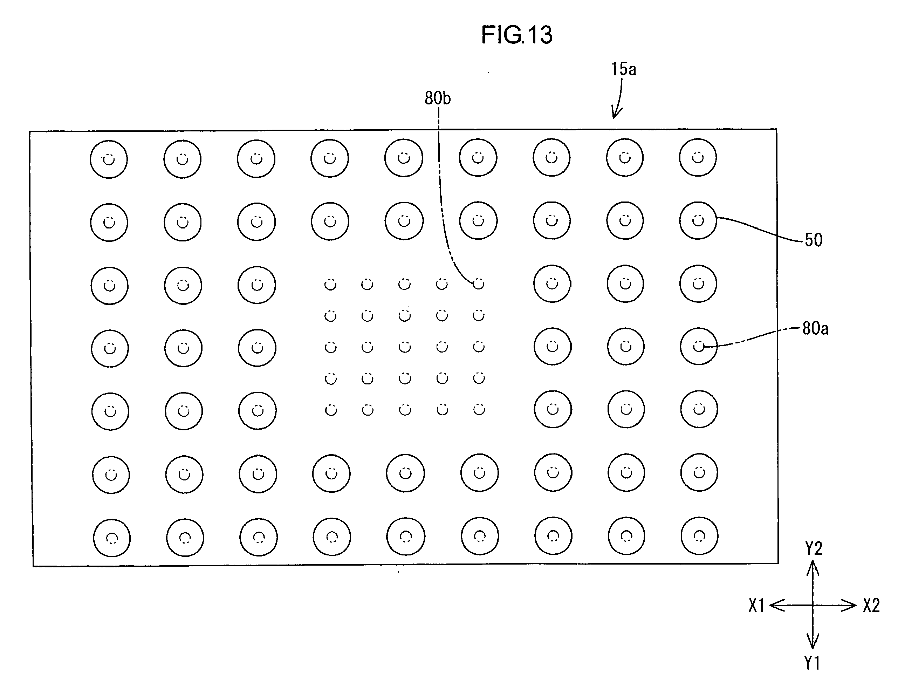

The light reflectance of the surface of the light reflection portion 50 face facing the LED light source 80 is 80%. On the other hand, the light reflectance of the surface of the diffuser plate 15a itself is 30%. Thus, the light reflection portion 50 has the light reflectance relatively higher than that of the diffuser plate 15a. The light reflection portions 50 are disposed on at least the portion of the diffuser plate overlapping with the light source low-density region LL and are formed especially in positions overlapping with the low density side LED light sources 80a in planar view. Moreover, as shown in FIG. 13, the area of the light reflection portion 50 in planar view is larger than that of the LED light source 80 (low density side LED light source 80a) in planar view. With such an arrangement aspect of the light reflection portions 50, on the surface of the diffuser plate 15a facing the LED light sources 80, the light reflectance of the diffuser plate 15a is highest in the portion overlapping with the light source low-density region LL.

As described above, adopted as a linear light source in the embodiment is the one that the LED light sources 80 are arranged on the elongated LED board 81. In this manner, the arrangement intervals of the linear light sources is easily changed by preparing a plurality of kinds of the LED boards 81 having different arrangement densities of the LED light sources 80.

Moreover, the diffuser lenses 24 are disposed on the light emitting side of the LED light sources 80 (80a) provided in at least the light source low-density region LL. Hence, light emitted from the LED light source 80 (80a) is firstly diffused by the diffuser lens 24. Accordingly, also if the LED light source 80 (80a) having high directivity of light is used, the directivity is mitigated. As a result, light of the adjacent LED light sources 80 (80a) mixes with each other also in the light source low-density region LL where the LED light sources 80 (80a) are disposed relatively sparsely, and this further suppresses the occurrence of a lamp image. Additionally, combined with the effect of the light reflection portions 50 formed in the region of the diffuser plate 15a overlapping with the light source low-density region LL, the occurrence of a lamp image in the light source low-density region LL is further suppressed.

The diffuser lens 24 is circular in planar view. Hence, light from the LED light source 80 (80a) is diffused by the diffuser lens 24 substantially evenly at 360 degrees. This further suppresses the occurrence of a lamp image.

Moreover, the diffuser lens 24 includes a light incident side recess 24D formed in a position overlapping with the LED light source 80 (80a) on a light incident surface facing the LED light source 80 (80a). Light from the LED light source 80 (80a) enters the light incident surface and the light incident side recess 24D has an inclined sidewall facing the LED light source 80 (80a). With such a configuration, most of light emitted from the LED light source 80 (80a) enters the light incident side recess 24D of the diffuser lens 24. Here, since the light incident side recess 24D has the inclined sidewall facing the LED light source 80 (80a), light entered the light incident side recess 24D reaches the sidewall, and can be refracted in the diffuser lens 24 at a wide angle via the sidewall (in other words, from the inside to the outside of the diffuser lens 24). Hence, a local increase in brightness in the region overlapping with the LED light source 80 (80a) on the diffuser lens 24 is suppressed, and the occurrence of a lamp image is further suppressed.

Moreover, the diffuser lens 24 includes a light exit side recess 24E recessed into the LED light source 80 (80a) side in a position of the light exit surface overlapping with the LED light source 80 (80a). Light incident from the LED light source 80 (80a) exits through the light exit surface. Compared with in other regions, light quantity reached from the LED light source 80 (80a) tends to become large in the region of the light exit surface overlapping with the LED light source 80 (80a), and brightness tends to become locally high. The light exit side recess 24E is formed in the position of the light exit surface overlapping with the LED light source 80 (80a) and accordingly, light from the LED light source 80 (80a) is refracted by the light exit side recess 24E at a wide angle or a part of light from the LED light source 80 (80a) is reflected by the light exit side recess 24. This suppresses a local increase in brightness in the region of the light exit surface overlapping with the LED light source 80 (80a) and also suppresses the occurrence of a lamp image is.

Moreover, surface roughening has been applied to at least the light incident surface of the diffuser lens 24, and accordingly, light is diffused still more excellently.

Moreover, service life of a point light source is extended and power consumption is lowered by using the LED light source 80 as a point light source.

As described above, the second embodiment of the present invention has been presented. However, the present invention is not limited to the above embodiment, and for example, various modifications shown below can be adopted. In the following modifications, the same reference numerals are assigned to the same structural elements and structural members as those of the above embodiment, and descriptions thereof will be omitted.

### <First modification of second embodiment>

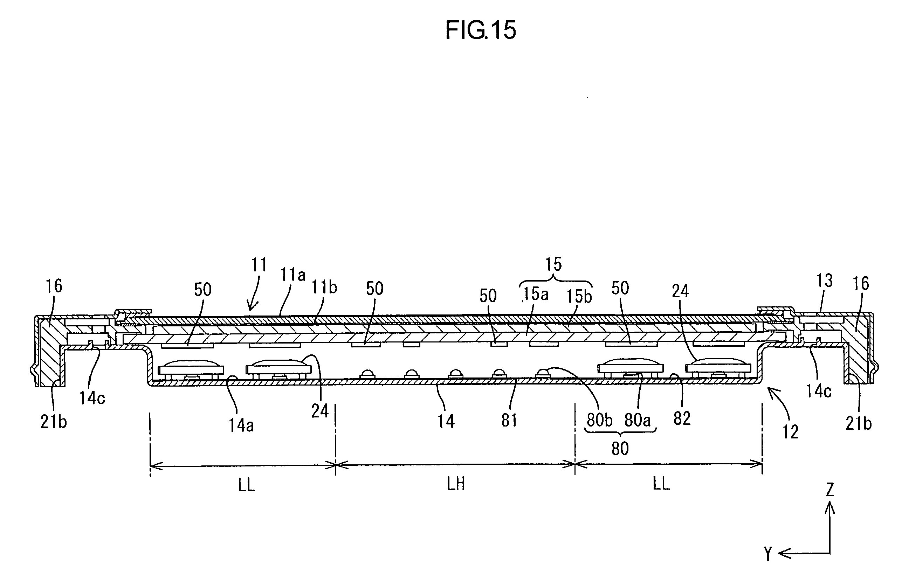

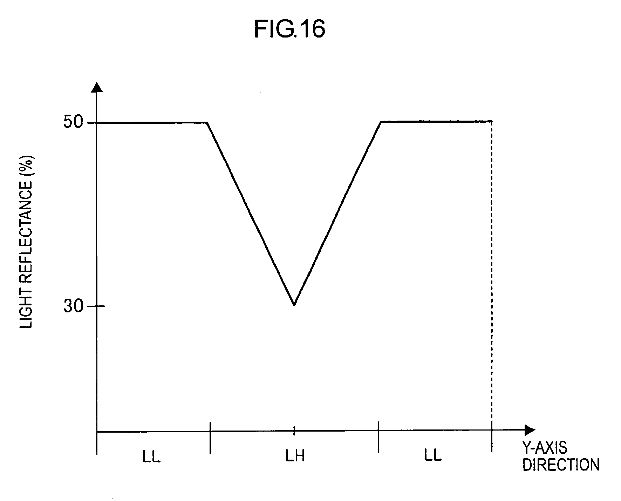

As a modification of an arrangement aspect of the light reflection portions 50 on the diffuser plate 15a, it is possible to adopt the one shown in FIGs. 15 and 16. FIG. 15 is a cross-sectional view of a modification of an arrangement aspect of the light reflection portions formed on the diffuser plate included in the liquid crystal display device, and FIG. 16 is a graph illustrating changes in light reflectance in the short side direction of the diffuser plate included in the liquid crystal display device of FIG. 15.

As shown in FIG. 15, the diffuser plate 15a in this modification includes the light reflection portions 50 at least in positions facing the LED light sources 80 (80a and 80b) in not only the positions overlapping with the light source low-density region LL but also the positions overlapping with the light source high-density region LH. In this case, the light reflection portion 50 is smaller in the area of a dot in the position overlapping with the light source high-density region LH than on the light source low-density region LL side, and/or is smaller in the density of dots than on the light source low-density region LL side. Hence, as shown in FIG. 16, the light reflectance of the diffuser plate 15a is smaller on the light source high-density region LH side than on the light source low-density region LL side.

Also in such a modification, brightness is ensured in the middle portion of the backlight unit 12 and the number of the LED light sources 80 is reduced, and this achieves cost reduction. Additionally, especially since the light reflection portions 50 are formed in the outer portion where the number of the LED light sources 80 is reduced, the occurrence of uneven brightness is suppressed. The light reflection portions 50 are partially formed also in the middle portion and this suppresses the occurrence of uneven brightness in the middle portion.

### <Second modification of second embodiment>

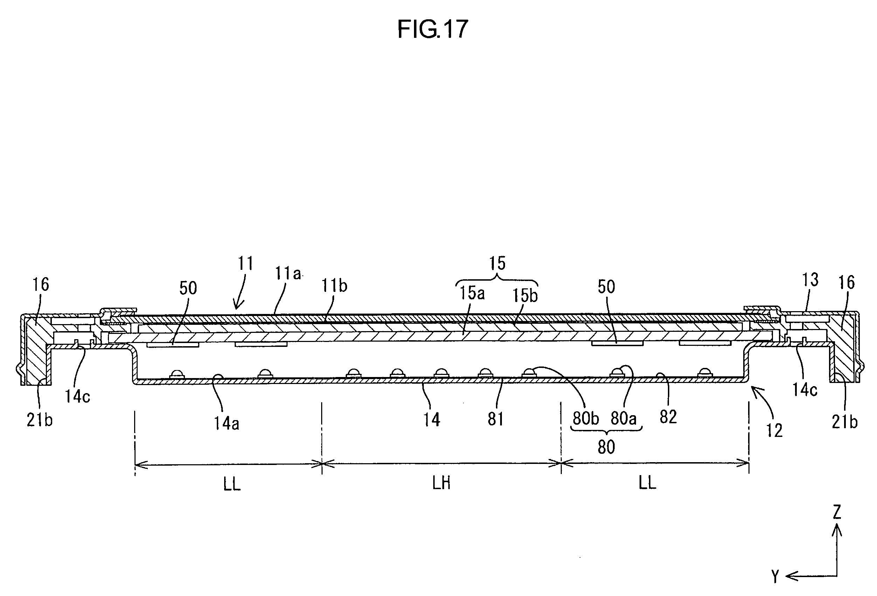

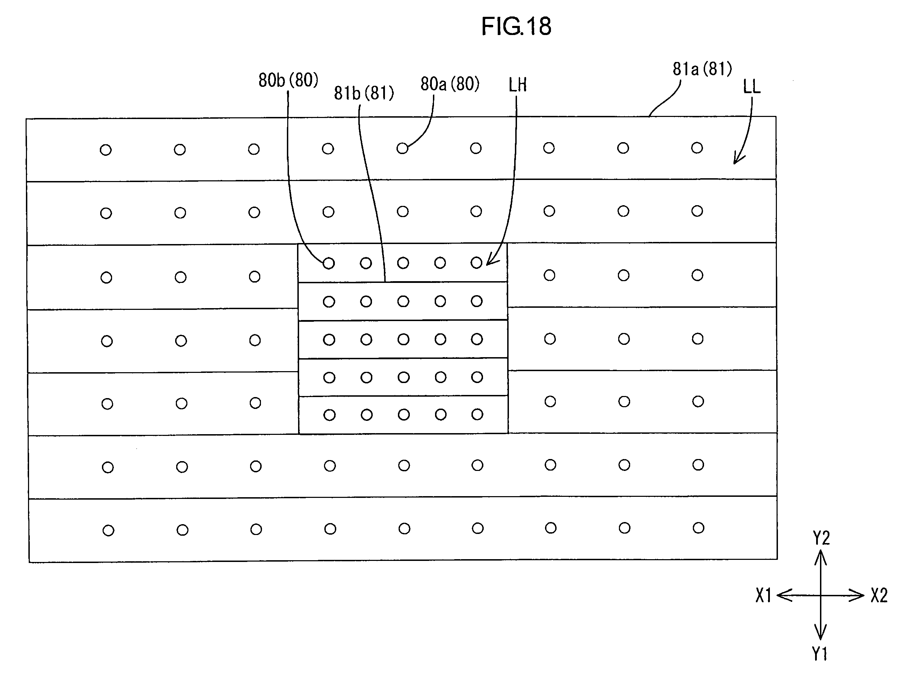

In the modification, a description will be given of the liquid crystal display device 10 having a configuration that the diffuser lens 24 is omitted with reference to FIGs. 17 and 18. FIG. 17 is a cross-sectional view of a modification of a schematic configuration of the LED light sources included in the liquid crystal display device, and FIG. 18 is a plan view of an arrangement configuration of the LED boards in the chassis included in the liquid crystal display device of FIG. 17.

As shown in FIGs. 17 and 18, in the backlight unit 12 in this modification, a plurality of the elongated LED boards 81, each including a plurality of the LED light sources 80, is disposed in alignment such that a longitudinal direction thereof corresponds to the long side direction of the chassis 14. The LED boards 81 are classified into the high density side LED board 81b where the arrangement intervals of the LED light sources 80 are relatively narrow and the low density side LED board 81a where the arrangement intervals of the LED light sources 80 are relatively wide. The high density side LED boards 81b are disposed in the middle portion of the chassis 14 to form the light source low-density region LH where the arrangement intervals of the LED light sources 80 are relatively narrow. On the other hand, the low density side LED boards 81a are disposed in the outer portion located on an outer side than the middle portion of the chassis 14 to form the light source low-density region LL where the arrangement intervals of the LED light sources 80 are relatively wide. The LED light sources disposed in the light source high-density region LH are illustrated as the high density side LED light sources 80b, and the LED light sources disposed in the light source low-density region LL as the low density side LED light sources 80a.

Additionally, the modification is different from the second embodiment in that no diffuser lens is provided for the LED light source 80b in the light source high-density region LH and the LED light source 80a in the light source low-density region LL. In other words, the light reflection portion 50 is formed on the diffuser plate 15a as means for suppressing uneven brightness of the LED light sources 80a arranged with wide intervals and low density. However, the diffuser lens as means for suppressing uneven brightness is not provided.

In this case, although it depends on the arrangement intervals of light sources, the light reflection portions 50 suppresses uneven brightness caused by the LED light sources 80a in the light source low-density region LL. Especially in order to further suppress uneven brightness, the light reflection portion 50 is made larger in the area of a dot than that of the second embodiment, or is made larger in the density of dots than that of the second embodiment.

### <Other embodiments>

As described above, the embodiments of the present invention have been presented. However, the present invention is not limited to the above embodiments explained in the above description and drawings. The following embodiments may be included in the technical scope of the present invention, for example.

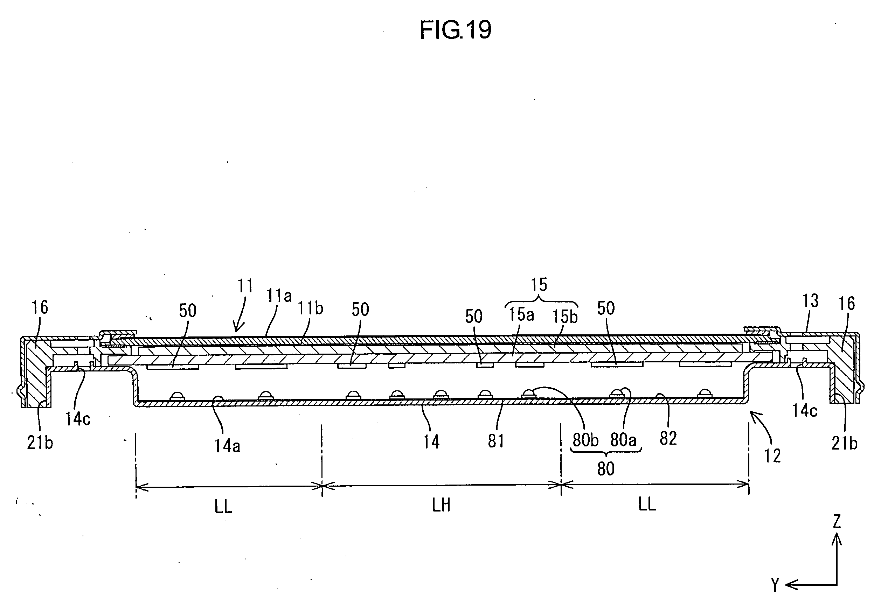

(1) In the second embodiment, illustrated as the modifications thereof are the configurations that the arrangement aspect of the light reflection portions on the diffuser plate is changed, and that the diffuser lens is omitted; however, as shown in FIG. 19, the configuration that combines them can be adopted, too. In this case, although it depends on the arrangement intervals of light sources, the light reflection portions 50 suppresses uneven brightness caused by the LED light sources 80a in the light source low-density region LL. Moreover, the light reflection portions 50 are partially formed in the light source high-density region LH, and this suppresses the occurrence of uneven brightness in the middle portion.

(2) In the second embodiment, an LED light source is used as a point light source. However, the present invention includes those using another kind of point light source such as a glow lamp.

(3) In the embodiments, the dot of the dot pattern constituting the light reflection portions is a round shape. However, the shape of the dot is not limited to this and it is possible to select an arbitrary shape including a polygon such as a square.

(4) In the embodiments, illustrated is the configuration that the diffuser plate, the diffuser sheet, the lens sheet, and the reflection type polarizing plate are combined as the optical sheet group; however, it is also possible to adopt a configuration that two diffuser plates are laminated as an optical sheet, for example.

(5) In the embodiments, the light reflection portion is formed on the surface facing the light source on the diffuser plate; however, the light reflection portion may be formed on a surface on a side opposite to the light source on the diffuser plate.

(6) In the embodiments, illustrated is the configuration that the light source high-density region is formed in the middle portion of the bottom plate of the chassis; however, it is possible to change as appropriate in accordance with the light quantity of the light source, the use conditions of the backlight unit, and the like, by forming the light source high-density region in a part of the ends in addition to the middle portion of the bottom plate, for example.

(7) In the embodiments, presented as a linear light source are the cold cathode tube and the one where the LED light sources are arranged on the elongated LED board; however, the present invention includes one using another kind of linear light source such as a hot cathode tube.

### EXPLANATION OF SYMBOLS

10: Liquid crystal display device (Display device)
11: Liquid crystal panel (Display panel)
12: Backlight unit (Lighting device)
14: Chassis
14b: Opening of the chassis
15a: Diffuser plate (Optical member, light scattering member)
17: Cold cathode tube (Linear light source)
17a: Low density side cold cathode tube (Linear light source)
17b: High density side cold cathode tube (Linear light source)
24: Diffuser lens
24D: Light incident side recess
24E: Light exit side recess
50: Light reflection portion
80: LED light source (Point light source)
80a: Low density side LED light source (Point light source)
80b: High density side LED light source (Point light source)
81: LED board (Board)
LL: Light source low-density region
LH: Light source high-density region
TV: Television receiver

## Claims

1. A lighting device comprising:
a plurality of linear light sources disposed in parallel;
a chassis housing the linear light sources and having an opening through which light from the linear light sources exits; and
an optical member facing the linear light sources and disposed to cover the opening, wherein:
the chassis is defined in a light source high-density region and a light source low-density region, and the linear light sources are arranged at relatively small intervals in the light source high-density region and the light sources are arranged at relatively large intervals in the light source low-density region ;and
the optical member includes a light reflection portion at least in a portion overlapping with the light source low-density region and configured to reflect light from the linear light sources in the light source low-density region.

2. The lighting device according to claim 1, wherein the optical member includes the light reflection portion in a portion overlapping with the linear light source in planar view.

3. The lighting device according to claim 2, wherein the light reflection portion is longer in length in a lateral direction of the linear light source in planar view than the linear light source.

4. The lighting device according to any one of claims 1 to 3, wherein the optical member includes the light reflection portion such that light reflectance of the optical member is highest in a portion overlapping with the light source low-density region.

5. The lighting device according to any one of claims 1 to 4, wherein the optical member includes the light reflection portion on a surface facing the linear light source.

6. The lighting device according to any one of claims 1 to 5, wherein the optical member includes the light reflection portion printed thereon.

7. The lighting device according to any one of claims 1 to 6, wherein the chassis includes the light source high-density region in a middle portion thereof.

8. The lighting device according to any one of claims 1 to 7, wherein the chassis includes the light source low-density region in a portion located on an outer side of a middle portion thereof.

9. The lighting device according to any one of claims 1 to 8, wherein the light source high-density region is smaller in area than the light source low-density region.

10. The lighting device according to any one of claims 1 to 9, wherein:
the chassis is rectangular in planar view; and
the linear light sources are disposed such that a longitudinal direction thereof corresponds to a long side direction of the chassis.

11. The lighting device according to any one of claims 1 to 10, wherein the linear light source is a cold cathode tube.

12. The lighting device according to any one of claims 1 to 10, wherein the linear light source is a hot cathode tube.

13. The lighting device according to any one of claims 1 to 10, wherein the linear light sources include point light sources arranged on an elongated board.

14. The lighting device according to claim 13, further comprising a diffuser lens configured to diffuse light from the point light source, the diffuser lens being provided on a light exit side of the point light source provided at least in the light source low-density region.

15. The lighting device according to claim 14, wherein the diffuser lens is circular in planar view.

16. The lighting device according to one of claims 14 and 15, wherein:
the diffuser lens includes a light incident surface and a light incident side recess formed on the light incident surface, and the light incident surface faces the point light source and light from the point light source enters the light incident surface, and the light incident side recess is formed on a portion of the light incident surface overlapping with the point light source and recessed into an optical member side and; and
the light incident side recess has an inclined sidewall facing the point light source.

17. The lighting device according to any one of claims 14 to 16, wherein the diffuser lens includes a light exit surface and a light exit side recess, and the light entering the light incident surface exits from the light exit surface, and the light exit side recess is formed on a portion of the light exit surface overlapping with the point light source and recessed into a point light source side.

18. The lighting device according to any one of claims 14 to 17, wherein at least the light incident surface of the diffuser lens is surface-roughened.

19. The lighting device according to any one of claims 14 to 18, wherein the point light source is an LED.

20. The lighting device according to any one of claims 1 to 19, wherein the optical member is a light diffusing member configured to diffuse light from the linear light sources.

21. A display device comprising:
the lighting device according to any one of claims 1 to 20; and
a display panel configured to perform display by use of light from the lighting device.

22. The display device according to claim 21, wherein the display panel is a liquid crystal panel using a liquid crystal.

23. A television receiver comprising the display device according to any one of claims 21 and 22.
